# EUROPEAN PATENT APPLICATION

(11) **EP 1 486 374 A1**
(43) Date of publication of application: **15.12.2004**
(21) Application number: 04011422.5
(22) Date of filing: 13.05.2004
(51) Int. Cl.: B60N 3/10, B60N 3/00, B60N 2/06, E05F 15/20, E05F 15/00, B60R 7/04, B60R 7/06, E05F 15/02, B60R 11/02

(54) **Moving device**

(30) Priority: 12.06.2003 JP 2003167841
(71) Applicant: Nifco Inc., Yokohama-shi, 244-8522 (JP)
(72) Inventor: Ichimaru, Takahide, Chigasaki-shi Kanagawa (JP); Nishida, Ryuhei, Yokohama-shi Kanagawa-ken (JP); Kawamoto, Masanobu, Yokohama-shi Kanagawa-ken (JP)
(74) Representative: Banzer, Hans-Jörg, Dipl.-Ing.

(57) **Abstract**

A moving device (10, 58, 60, 62, 64, 66, 90, 94, 96, 102, 110, 114, 118, 124) moves a movable member between a usable position and a non-usable position. The moving device includes a driving device (18) attached to the movable member for moving the same, and a control device (40) electrically connected to the driving device for operating the driving device to move the movable member between the usable position and the non-usable position. The moving device further includes a sensor (38, 44, 54, 56) for detecting a movement of an occupant so that the control device moves the movable member based on a signal from the sensor. The movable member can be easily actuated by the sensor.

## Description

### Background of the Invention and Related Art Statement

The invention relates to a moving device disposed in a compartment of a vehicle for allowing a movable member to move between a usable state and a non-usable state.

Generally, a console box is disposed at a center console between a driver seat and a passenger seat in a vehicle. The console box is formed of a box-shape housing portion and a lid for opening or closing the housing portion. When the lid is opened, the housing portion is in a usable state.

For example, in Japanese Patent Publication (Kokai) No. 11-278514, a push button is disposed to be movable in and out with respect to an upper surface of a housing portion, and the push button is pressed to release a locked state of a locking device to open a lid.

However, when such a mechanical type push button is pushed, it is necessary to provide an operation stroke upon pushing the button with a fingertip. Therefore, in order to open the lid, a user has to be in a posture for applying force with a fingertip. Also, in the mechanical type push button, an operating sound is made when the push button is pressed, thereby causing bothersome and poor quality.

In view of the above problems, it is an object of the invention to provide a moving device, wherein a user can easily operate the moving device in any posture to allow a movable member to be in a usable state and a non-usable state, thereby obtaining high quality.

Further objects and advantages of the invention will be apparent from the following description of the invention.

### Summary of the Invention

According to the present invention, this object is achieved by a moving device as defined in independent claim 1. The dependent claims define preferred and advantageous embodiments of the invention.

According to a first aspect of the invention, the moving device for moving a movable member disposed in a compartment of a vehicle between a usable state or position and a non-usable state or position includes a driving device for moving the movable member; a sensor for detecting a movement of a user; and a control device for allowing the movable member to become the usable state or the non-usable state by operating the moving device.

In the first aspect of the invention, the movable member disposed in the compartment of the vehicle is moved to the usable state or the non-usable state by operating the driving device driven by the control device based on a signal from the sensor for detecting the movement of the user.

Accordingly, since the sensor is used for detecting the movement of the user, the moving device of the invention does not require an operational stroke such as pressing as compared with a mechanical sensor using a push button and the like and force to be applied with a fingertip. Therefore, the user can easily operate the driving device in any posture to thereby allow the movable member to the usable state or the non-usable state. Also, since there is no operational sound as compared with the push button, high quality can be obtained.

Further, in the above structure, since the sensor simply detects the movement of, for example, a finger lightly touching the sensor or a slight movement of the driver, the driver does not need to look for an operational button, and can concentrate on driving.

According to a second aspect of the invention, the moving device for moving a movable member covering a housing portion disposed in a compartment of a vehicle to make the housing portion in a usable state or a non-usable state, includes a driving device for moving the movable member; a sensor for detecting a movement of a user; and a control device for moving the housing portion in the usable state or the non-usable state by operating the driving device based on a signal from the sensor.

In the second aspect of the invention, the control device operates the driving device on the signal from the sensor for detecting the movement of the user. The movable member covering the housing portion disposed in the compartment of the vehicle is moved to make the housing portion in the usable state or the non-usable state. Thus, the same effect as described in the first aspect of the invention can be obtained.

According to a third aspect of the invention, the control device makes the movable member in the usable state or the non-usable state based on a signal from one single sensor. In the third aspect of the invention, the movable member is in the usable state or the non-usable state based on a signal from the one single sensor. For example, as compared with a moving device in which a mechanical opening button for opening and a mechanical closing button for closing are provided at different positions, the moving device can be operated without knowing right-and-left or ups-and-downs, so that the driver can concentrate on driving.

According to a fourth aspect of the invention, the control device makes the housing portion in the usable state or the non-usable state based on a signal from one single sensor. In the fourth aspect of the invention, the housing portion is in the usable state or the non-usable state based on the signal from the single sensor. Thus, the same effect as described in the third aspect of the invention can be obtained.

According to a fifth aspect of the invention, the sensor is attached to the movable member. In the fifth aspect of the invention, the sensor is attached to the movable member. Accordingly, according to a suitable mode of human engineering such as touching an object to be moved, the movable member can become the usable state or the non-usable state.

According to a sixth aspect of the invention, the sensor is attached to a periphery of the movable member. In the sixth aspect of the invention, the sensor is attached to the periphery of the movable member. Depending on a moving path of the movable member such as, for example, rotation, the sensor may be attached to the periphery of the movable member.

According to a seventh aspect of the invention, the movable member becomes the usable state when the movable member rotates. In the seventh aspect of the invention, the movable member becomes the usable state when the movable member rotates.

For example, when a sun visor is provided in the compartment of the vehicle as the movable member, the sun visor may be provided with the sensor. The sun visor rotates to become the usable state when the sensor detects the movement of the user. When the sensor detects the movement of the user again, the sun visor becomes the non-usable state.

According to an eighth aspect of the invention, the movable member slides to become the usable state. In the eighth aspect of the invention, the movable member slides to become the usable state.

For example, when a cup holder is disposed in a compartment of a vehicle as a movable member, a sensor may be provided at an end portion of the cup holder exposed in the compartment. The cup holder slides to become the usable state when the sensor detects the movement of the user. When the sensor detects the movement of the user again, the cup holder is stored to become the non-usable state.

According to a ninth aspect of the invention, the movable member becomes a usable state through opening or closing thereof. In the ninth aspect of the invention, the movable member becomes a usable state through opening or closing thereof.

For example, when a lid portion covers a housing portion of a console box disposed in a compartment of a vehicle as a movable member, a sensor may be provided around the lid portion. The lid portion opens to become the usable state when the sensor detects the movement of the user. When the sensor detects the movement of the user again, the lid portion is closed and becomes the non-usable state.

According to a tenth aspect of the invention, the sensor is an electric wave type sensor for detecting a movement of a hand according to a time during which an electric wave sent out from an antenna portion hits against the hand and bounced back. In the tenth aspect of the invention, the electric wave type sensor detects the movement of the hand. The electric wave type sensor can detect any object capable of reflecting the electric wave, and a single sensor can cover a wide area. Further, even if the hand does not directly touch the sensor, the sensor detects the movement of the hand. Therefore, for example, in a case that the movable member is a sun visor, the user can make the sun visor in the usable state or in the non-usable state while sitting on the seat without leaning forward.

According to an eleventh aspect of the invention, the sensor is an electrostatic capacitance type sensor detecting the movement of the hand through a change in electrostatic capacitance when the hand touches the sensor. In the eleventh aspect of the invention, the electrostatic capacitance type sensor detects the movement of the hand. Anything with conductivity can be used as a sensor electrode, so that the electrostatic capacitance type sensor is very convenient. The electrostatic capacitance type sensor is less sensitive to a noise than the electric wave type sensor, thereby causing malfunction less frequently. Further, it is easy to adjust the sensitivity of the electrostatic capacitance type sensor, and a circuit of the sensor is simple, thereby reducing cost.

According to a twelfth aspect of the invention, the electrostatic capacitance type sensor is a material type sensor using a conductive member. The electrostatic capacitance sensor is the material type sensor using the conductive member such as a conductive coating, a conductive resin, metal, and the like.

According to a thirteenth aspect of the invention, the sensor is a heat detecting sensor for detecting the movement of the hand through a body temperature. In the thirteen aspect, the heat detecting sensor detects the movement of the hand.

According to a fourteenth aspect of the invention, the sensor is a pressure detecting sensor for detecting the movement of the hand through a pressure change when the hand touches the sensor. In the fourteenth aspect, the pressure detecting sensor detects the movement of the hand.

According to a fifteenth aspect of the invention, the sensor is a light detecting sensor and formed of a light emitting portion for emitting light and a light receiving portion for receiving the light from the light emitting portion, so that when the hand blocks the light, the movement of the hand is detected. In the fifteenth aspect, when the hand blocks the light, the light detecting sensor detects the movement of the hand. The light detecting sensor has a high resolution, so that even when the light is slightly blocked, the movement of the hand can be detected. The light detecting sensor also has a high sensitivity and is less sensitive to an electric noise, thereby causing malfunction less frequently with respect to the electric wave from a cell phone. The sensor has a simple circuit with low cost. The light detecting sensor detects the movement of the user when the light from the light emitting portion is blocked, so that the user can use something else other than the hand.

According to a sixteenth aspect of the invention, the light detecting sensor is an infrared transmission type sensor formed of the light emitting portion and the light receiving portion opposed to each other. In the sixteenth aspect of the invention, the infrared transmission type sensor is used as the light detecting sensor, wherein the light emitting portion and the light receiving portion are opposed. Accordingly, when the hand blocks the light from the light emitting portion, the light does not reach the light receiving portion, so that the movement of the hand can be detected.

According to a seventeenth aspect of the invention, the light detecting sensor is an infrared reflection type sensor wherein the light emitting portion and the light receiving portion for receiving the light from the light emitting portion and reflected at the hand are disposed adjacent to each other. In the seventeenth aspect of the invention, the infrared reflection type sensor is used as the light detecting sensor, wherein the light emitting portion and light receiving portion are disposed adjacent to each other, so that the light emitted from the light emitting portion is blocked by the hand and reflected to enter the light receiving portion. Thus, the movement of the hand can be detected. The infrared reflection type sensor is used, so that the light emitting portion and the light receiving portion are disposed on the same plane. Accordingly, it is easy to attach the sensor, and the sensor can be attached in a wider area as compared with the infrared transmission type sensor.

According to an eighteenth aspect of the invention, the driving device includes a rotating device for rotating the movable member and a motor for providing a rotational force to the rotating device. In the eighteenth aspect of the invention, the driving device is formed of the rotating device and the motor, so that the motor provides the rotational force to the rotating device for rotating the movable member. It is arranged such that a rotating speed of the motor can be varied, so that the rotating speed of the movable member can be changed and the movable member can rotate quietly. Accordingly, when the movable member moves, it is possible to eliminate a contact sound between the movable member and the housing portion and the like, thereby providing high quality feeling for the moving device.

According to a nineteenth aspect of the invention, the driving device is formed of a motor for providing a rotational force and a converting device for converting the rotational force from the motor to a sliding force to slide the movable member. In the nineteenth aspect of the invention, the converting device converts the rotational force from the motor to the sliding force to slide the movable member. The converting device is formed of, for example, a pinion and a rack. The rack is disposed to the movable member, and the pinion is directly connected to the motor, so that the pinion engages the rack. The rotational force of the motor is transmitted to the pinion, and the movable member slides through the rack, so that the same effect as that in the eighteenth aspect of the invention can be obtained.

### Brief Description of the Drawings

Fig. 1 is an explanatory view showing an arrangement in a compartment of a moving device according to an embodiment of the present invention;
Fig. 2 is a perspective view showing a console box with the moving device according to the embodiment of the invention in a state that a lid thereof is closed;
Fig. 3 is a perspective view showing a console box with the moving device according to the embodiment of the invention in a state that the lid thereof is opened;
Fig. 4 is a side view showing a driving system of the console box to which the moving device according to the embodiment of the invention is applied;
Fig. 5 is an explanatory view of an electrostatic capacitance type sensor disposed to the console box to which the moving device according to the embodiment of the invention is applied;
Fig. 6(A) is an explanatory view showing a mechanical type sensor with push-buttons, and Fig. 6(B) is an explanatory view showing an electrostatic capacitance type sensor;
Fig. 7 is an explanatory view showing an electric wave type sensor;
Fig. 8 is an explanatory view showing an infrared radiation transmission type sensor;
Fig. 9 is an explanatory view showing an infrared radiation reflection type sensor;
Figs. 10(A) and 10(B) are perspective views showing a modified example of the lid of the console box to which the moving device according to the embodiment of the present invention is applied, wherein Fig. 10(A) is a view showing a non-usable state and Fig. 10(B) is a view showing a usable state;
Figs. 11(A) and 11(B) are perspective views showing a movement of a cup holder to which the moving device according to the embodiment of the present invention is applied, wherein Fig. 11 (A) is a view showing a non-usable state and Fig. 11 (B) is a view showing a usable state;
Figs. 12(A) and 12(B) are perspective views showing a second cup holder to which the moving device according to the embodiment of the present invention is applied, wherein Fig. 12(A) is a view showing a non-usable state and Fig. 12(B) is a view showing a usable state;
Figs. 13(A) and 13(B) are perspective views showing a third cup holder to which the moving device according to the embodiment of the present invention is applied, wherein Fig. 13 (A) is a view showing a non-usable state and Fig. 13 (B) is a view showing a usable state;
Figs. 14(A) and 14(B) are perspective views showing a fourth cup holder to which the moving device according to the embodiment of the present invention is applied, wherein Fig. 14(A) is a view showing a non-usable state and Fig. 14(B) is a view showing a usable state;
Fig. 15 is a side view showing a movement of a pop-up armrest to which the moving device according to the embodiment of the present invention is applied;
Figs. 16(A) and 16(B) are perspective views showing a movement of an armrest to which the moving device according to the embodiment of the present invention is applied, wherein Fig. 16(A) is a view showing a non-usable state and Fig. 16(B) is a view showing a usable state;
Figs. 17(A) and 17(B) are perspective views showing a movement of a glove box to which the moving device according to the embodiment of the present invention is applied, wherein Fig. 17(A) is a view showing a non-usable state and Fig. 17(B) is a view showing a usable state;
Figs. 18(A) and 18(B) are perspective views showing a movement of a navigator to which the moving device according to the embodiment of the present invention is applied, wherein Fig. 18 (A) is a view showing a non-usable state and Fig. 18 (B) is a view showing a usable state;
Figs. 19(A) and 19(B) are perspective views showing a movement of an ashtray to which the moving device according to the embodiment of the present invention is applied, wherein Fig. 19(A) is a view showing a non-usable state and Fig. 19(B) is a view showing a usable state;
Figs. 20(A) and 20(B) are perspective views showing a movement of a second ashtray to which the moving device according to the embodiment of the present invention is applied, wherein Fig. 20(A) is a view showing a non-usable state and Fig. 20(B) is a view showing a usable state;
Figs. 21(A) and 21(B) are perspective views showing a movement of a table to which the moving device according to the embodiment of the present invention is applied, wherein Fig. 21(A) is a view showing a non-usable state and Fig. 21(B) is a view showing a usable state; and
Figs. 22(A) and 22(B) are perspective views showing a movement of a trash box to which the moving device according to the embodiment of the present invention is applied, wherein Fig. 22(A) is a view showing a non-usable state and Fig. 22(B) is a view showing a usable state.

### Detailed Description of Preferred Embodiments

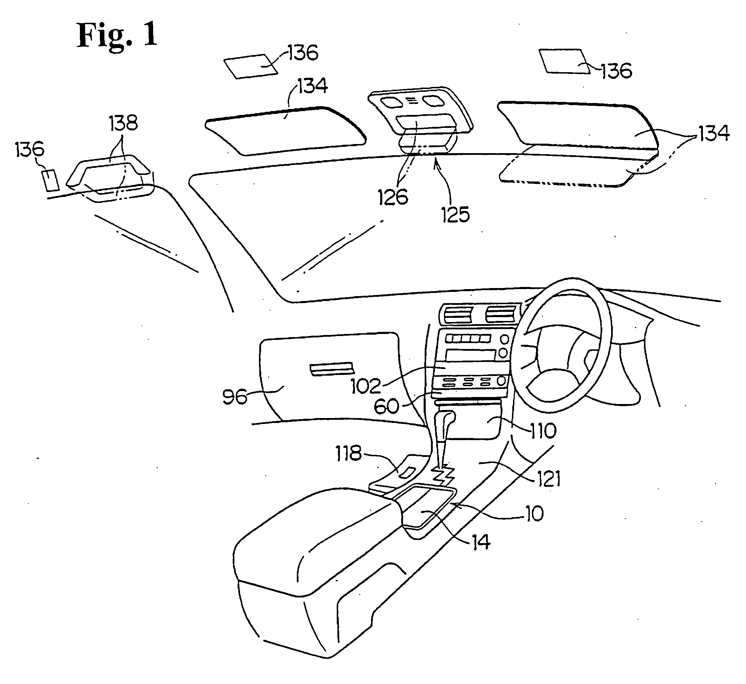

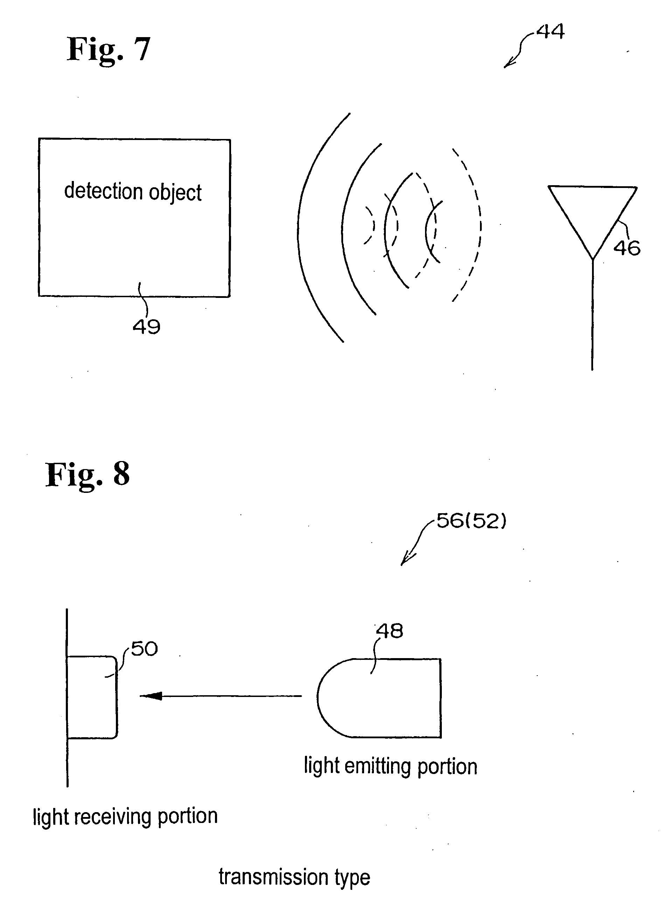

Figs. 1 through Fig. 3 show a console box 10 as a moving device according to an embodiment of the invention. The console box 10 is disposed between a driver seat and a passenger seat in a vehicle, and formed of a box-shape housing portion 12 (refer to Fig. 8) and a lid 14 for opening and closing the housing portion 12. The lid 14 includes a lid 14A and a lid 14B, and the housing portion 12 can be opened at a center portion along a longitudinal direction thereof in a double door opened state.

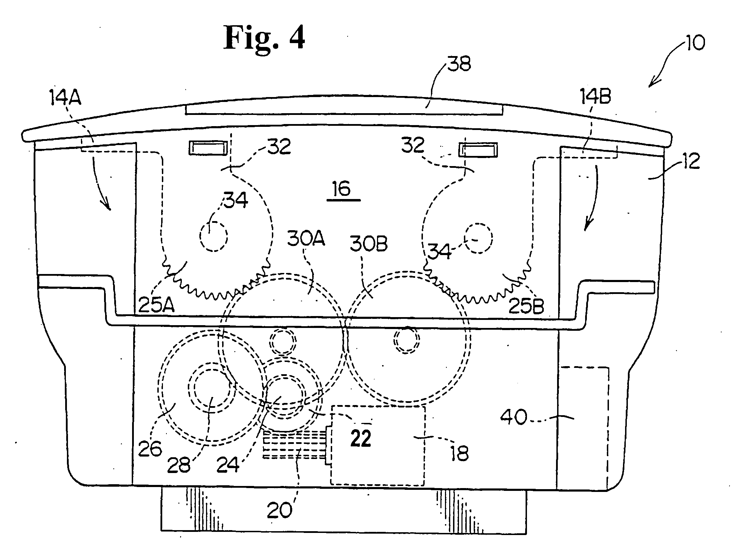

As shown in Fig. 4, a gear housing portion 16 is provided on a sidewall in a widthwise direction of the housing portion 12, so that a plurality of gears 30A and 30B and the like can be disposed therein. A motor 18 capable of rotating in forward and reverse directions is disposed at a bottom portion of the gear housing portion 16, and a worm gear 20 is directly connected to the motor 18. When the motor 18 is actuated, a driving force of the motor 18 is transmitted to the worm gear 20.

A gear 22 engages the worm gear 20, and the driving force transmitted to the worm gear 20 is transmitted to rotate the gear 22. A pinion 24 is coaxially fixed on a shaft of the gear 22 to integrally rotate with the gear 22. Also, the pinion 24 engages a gear 26 so that the rotational force of the pinion 24 is transmitted.

Also, a pinion 28 is coaxially fixed to a shaft of the gear 26 to integrally rotate therewith. The pinion 28 engages a gear 30A, and the gear 30A engages a gear 30B having the same diameter as that of the gear 30A, so that the rotational force transmitted from the pinion 28 is transmitted to the gear 30B from the gear 30A, and the gear 30A is rotated at the same linear velocity as that of the gear 30B.

The gear 30A and gear 30B engage a sector gear 25A and a sector gear 25B, respectively. Here, the sector gears 25A and 25B are formed on front edge portions of the axial members 32 extending downwardly from bottom surfaces of both edge portions of the respective lids 14A and 14B in the longitudinal direction. When the rotational force is transmitted to the sector gears 25A and 25B through the gears 30A and 30B, the sector gears 25A, 25B are rotated around the shaft portions 34 fixed to the sidewall in the widthwise direction of the housing portion 12, and the lids 14A and 14B are rotated through the shaft members 32 to thereby open or close the housing portion 12.

The lids 14A and 14B are flush with the upper edge surfaces of the sidewalls of the housing portion 12 in the closed state. When the lids 14A and 14B move along inner sidewalls of the housing portion 12 to open, the side edge surfaces of the lids 14A and 14B are flush with the upper edge surfaces of the sidewalls of the housing portion 12 in the open state.

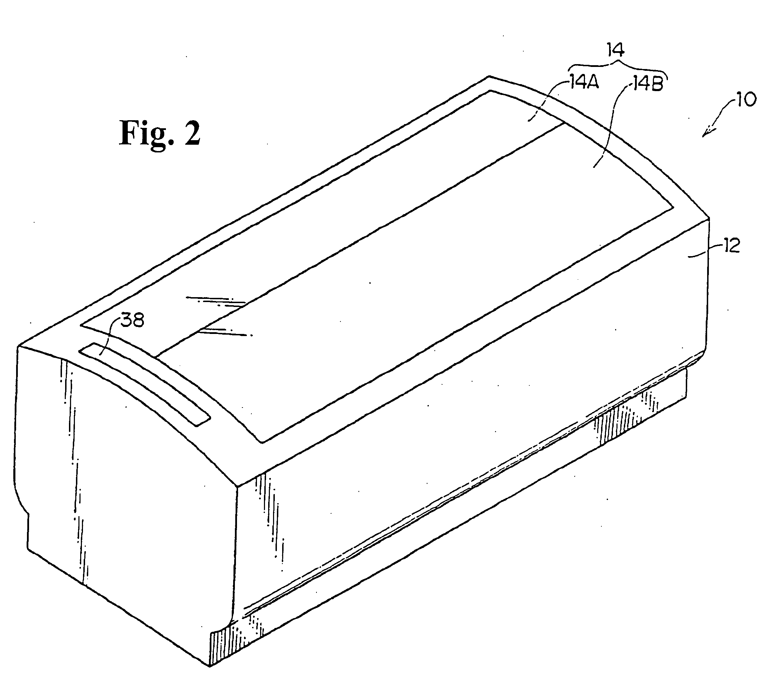

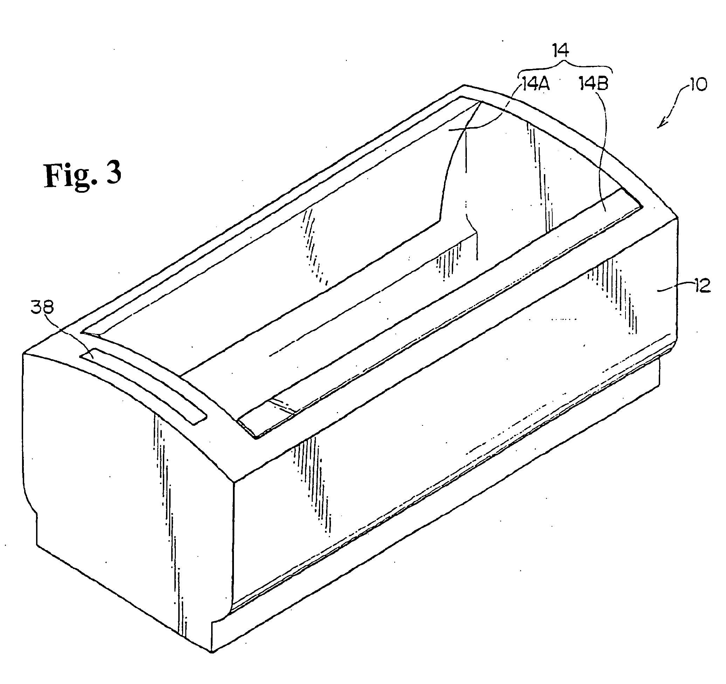

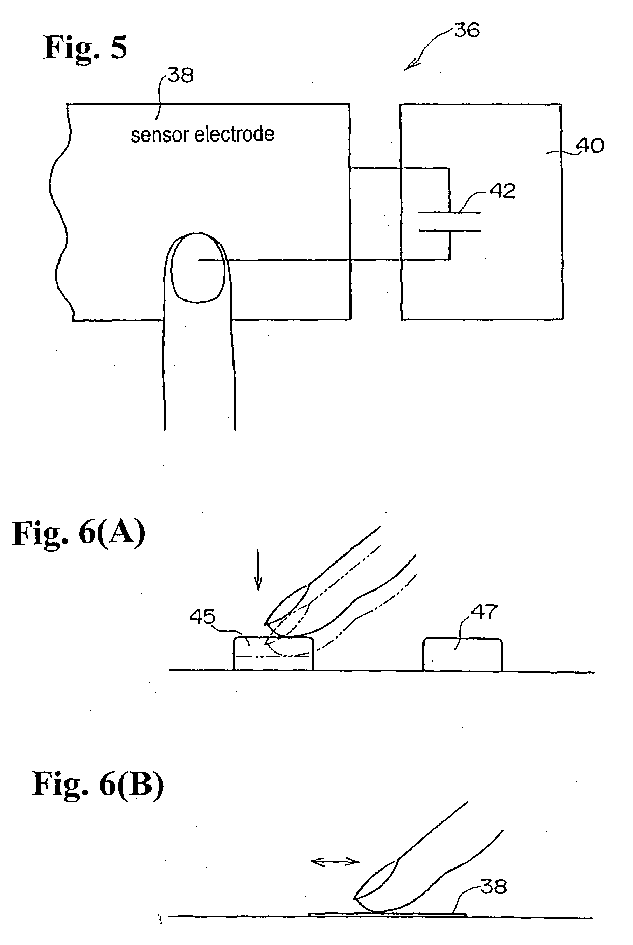

Incidentally, as shown in Figs. 2 and 3, a metal sensor electrode 38 constituting an electrostatic capacitance type sensor 36 as shown in Fig. 5 is provided on an upper edge surface of one of the sidewalls of the housing portion 12 in the widthwise direction. When a finger is brought closer to the sensor electrode 38, the capacity of a capacitor 42 disposed in a control device 40 changes with an electrostatic capacitance charged in a human body in a range of 10 pF to 100 pF.

Here, a motor 18 (refer to Fig. 4) is connected to the control device 40. When the finger is brought closer to the sensor electrode 38 and the capacity of the capacitor 42 in the control device 40 changes, the motor 18 is activated to thereby alternatively rotate in forward and reverse directions.

The rotational speed of the motor 18 is controlled by the control device 40, so that the lids 14A and 14B are quietly opened and closed as much as possible by slowing down the rotation speed in the vicinity of the opening completion position or the closing completion position.

Next, an effect of the console box as a moving device according to the embodiment of the invention will be explained.

As shown in Fig. 2, the sensor electrode 38 is provided on the upper edge surface of one sidewall of the housing portion 12 of the console box 10, so that the sensor electrode 38 detects movement of a hand. As shown in Fig. 5, when the hand is brought closer to the sensor electrode 38 and the capacity of the capacitor 42 in the control device 40 changes, the motor 18 as shown in Fig. 4 is actuated (rotate in the forward direction) and the lids 14A and 14B of the console box 10 are opened through the gear 30A, gear 30B, sector gear 25A, sector gear 25B and the like (usable state).

In this state, when the hand is brought closer to the sensor electrode 38 and the capacity of the capacitor 42 in the control device 40 changes, the motor 18 is actuated (rotate in the reverse direction), and the lids 14A and 14B of the console box 10 are closed (unusable state).

Here, for example, when the opened lids 14A and 14B are manually closed, the side edge portions of the lids 14A and 14B are projected from the upper edge surfaces of the sidewalls of the housing portion 12 and finger engaging portions must be provided to engage the fingers.

However, in the present embodiment, since the motor 18 is capable of rotating in the forward and reverse directions as a driving device for opening and closing the lids 14A and 14B, the side edge surfaces of the lids 14A and 14B are substantially flush with the upper edge surfaces of the sidewalls of the housing portion 12 in the closed or open state of the lids 14A and 14B. Thus, it is not necessary to provide the finger engaging portions.

Also, since no step is formed between the side edge surfaces of the lids 14A and 14B and the upper edge surfaces of the sidewalls of the housing portion 12 in the closed or opened state of the lids 14A and 14B, a high-quality feeling can be obtained.

Further, the control device 40 controls the rotating speed of the motor 18, so that the rotating speed in the vicinity of the opening completion position or the closing completion position of the lids 14A and 14B is slowed down. Thus, the lids 14A and 14B are quietly opened or closed as much as possible to thereby not generate a contact sound when the lids 14A and 14B are opened or closed.

Thus, it is not necessary to provide a felt and the like for preventing the contact sound at portions contacting the housing portion 12 on moving paths of the lids 14A and 14B; or at portions where the lids 14A and 14B contact each other in the state where the lids 14A and 14B are closed, thereby reducing cost.

On the other hand, a sensor such as an electrostatic capacitance type sensor is used for detecting the movement of the hand. Accordingly, it is not necessary to provide any operational stroke such as pressing operation and the like in the sensor as shown in Fig. 6(B). It is also not necessary to forcibly operate with a fingertip as compared with a mechanical type sensor by a push button 45 (opening button 45) and the like as shown in Fig. 6(A). Thus, the motor 18 can be easily actuated in any posture of the user to open or close the lids 14A and 14B. Also, different from the sensor with the push button 45, since the sensor of the embodiment does not make an operational sound, a high-grade feeling can be obtained.

Also, in an electrostatic capacitance type sensor 36 as shown in Fig. 5, the sensitivity can be easily adjusted, so that it is possible to detect the movement by lightly touching the sensor electrode 38 or detect the moving sign of the driver through raising the sensitivity. Thus, it is not necessary for a driver to look for an operation button with eyes to thereby concentrate attention on driving. Further, the electrostatic capacitance type sensor is less sensitive to a noise and easy to operate correctly. Furthermore, since a circuit of the sensor is simple, thereby reducing cost.

In the present embodiment, the lid 14 can be opened or closed by the signal from the single sensor electrode 38. For example, as compared with a mechanical type moving device with an opening button 45 for opening and a closing button 47 for closing disposed at different positions as shown in Fig. 6(A), the closing or opening operation can be carried out without being aware of the right-or-left or up-or-down direction in Fig. 6(B). Accordingly, it is not necessary to look for the opening button 45 or the closing button 47. Thus, the driver can concentrate on driving. (Finger touches the button in Fig. 6(B) to compare to Fig. 6(A). In actual case, a palm can simply move over the sensor electrode 38).

Incidentally, in the electrostatic capacitance type sensor 36 as shown in Fig. 5, any material with conductivity can be used as the sensor electrode 38. Thus, in the present embodiment, not only a metal member but also a conductive resin or conductive coating may be used. Also, in the present embodiment, the electrostatic capacitance type sensor 36 is used, but not limited thereto, and any sensor may be used for detecting the movement.

For example, as shown in Fig. 7, an electric wave type sensor 44 may be used for detecting the movement of the hand. The electric wave type sensor 44 detects the movement of the hand by a time during which an electric wave sent out from an antenna portion 46 hits against an object to be detected (human hand) 49 and returns. In the electric wave type sensor 44, any object to be detected reflecting the electric wave can be detected, and one sensor can cover a large area.

Further, as a sensor for detecting movement of a human, a light-sensitive sensor may be used. The light-sensitive sensor includes an infrared radiation transmission type sensor and an infrared radiation reflection type sensor. As shown in Fig. 8, in the infrared radiation transmission type sensor 56, an emitting portion 48 for emitting light and a receiving portion 50 for receiving the light from the emitting portion 48 are disposed face-to-face, so that when the hand blocks the light from the emitting portion 48, the movement of the hand is detected.

In a case of a light sensitive sensor 52, resolution is high, so that even if light is slightly blocked by the hand, the movement of the hand can be detected. Also, the light sensitive sensor 52 has a high sensitivity and is less sensitive to an electrical noise. Accordingly, there is no risk of malfunction with respect to the electric wave and the like of a cell phone. Further, the light sensitive sensor has a simple circuit and is made low cost. Furthermore, when the light path from the light emitting portion 48 is blocked, the movement of the human can be detected, and a part other than the hand may be used.

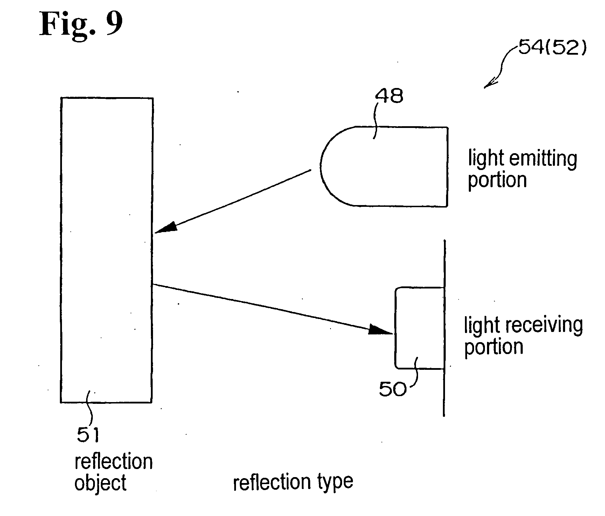

On the other hand, as shown in Fig. 9, in the infrared radiation reflection type sensor 54, a light emitting portion 48 is disposed adjacent to a light receiving portion 50. When the light emitted from the light emitting portion 48 is blocked by a reflection object 51 (human hand), the light reflected by the hand enters the light receiving portion 50 to detect the movement of the hand.

In a case of the infrared radiation reflection type sensor 54, the emitting portion 48 and the receiving portion 50 are disposed on the same plane. Accordingly, the infrared radiation reflection type sensor can be easily installed in an area larger than that of the infrared radiation transmission type sensor 56.

In addition to the above-mentioned sensors, a heat detecting sensor may be used to detect a human body temperature for detecting the movement of the hand, or a pressure detecting sensor may be used to detect a pressure change when the hand touches for detecting the movement of the hand.

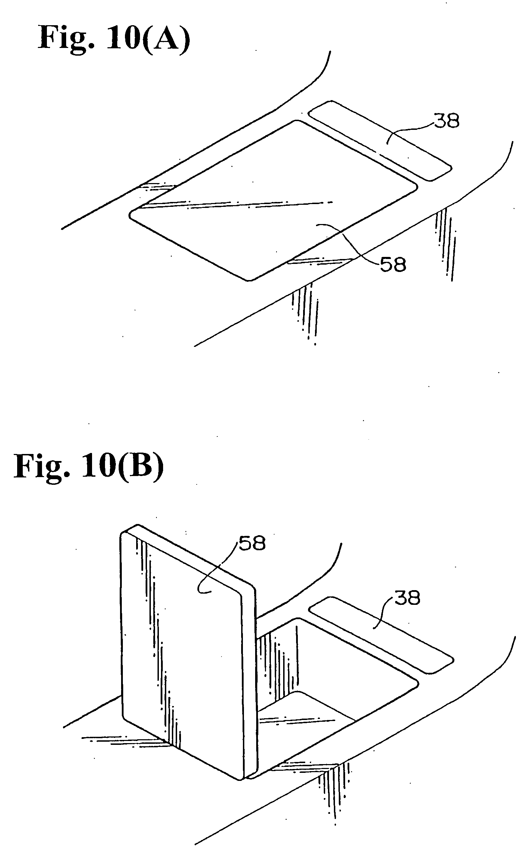

As shown in Figs. 2 and 3, the double lids 14A and 14B are provided to the housing portion 12, but not limited to the double lids 14A and 14B. A single lid 58 may be used for rotatably opening or closing as shown in Fig. 10(A) and 10(B). A sliding-type lid or an accordion-fold sliding lid (not shown) may be used for slidably opening or closing.

Further, in the embodiment, the motor 18 is connected to the control device 40 to control the speed thereof as shown in Fig. 4. Alternatively, a damper (not shown) may be used for controlling the rotating speed.

For example, dampers may be disposed on the moving paths of the sector gears 25A and 25B. It is arranged that when the sector gears 25A and 25B are rotated by a predetermined angle, the pinions provided on the dampers engage the sector gears 25A and 25B. Accordingly, when the lids 14A and 14B are rotated by a predetermined angle, the rotations thereof may be damped.

Incidentally, in the present embodiment, although the console box 10 is used as the moving device, any moving device disposed in a compartment of a vehicle may be used. Therefore, the moving device is not limited to the console box 10.

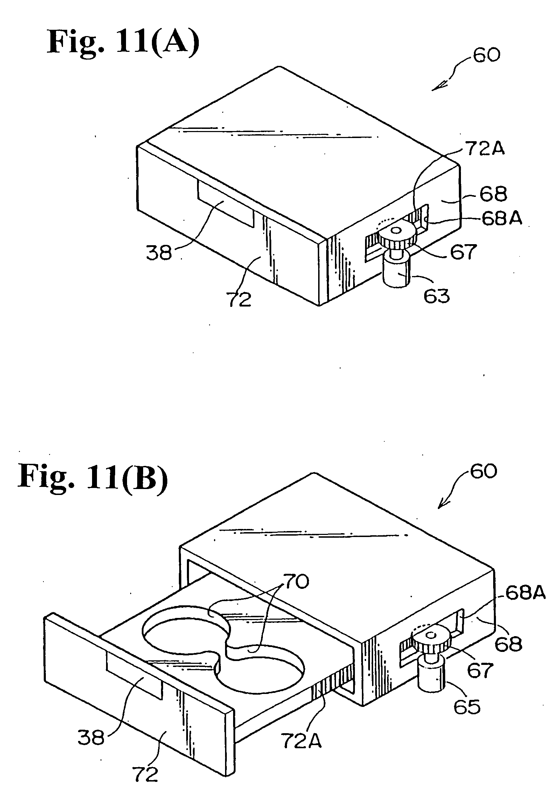

For example, as shown in Figs. 11(A) through 14(B), the moving device may be applied to cup holders 60, 62, 64 and 66. In the cup holder 60 as shown in Fig. 1 and Figs. 11(A) and 11(B), a case 68 is attached to an instrument panel and the like at the front surface in the compartment, and the case 68 houses a holder 72 with cup holding portions 70.

A rack 72A is formed on a sidewall of the holder 72, and an opening portion 68A corresponding to the rack 72A is provided to a case 68. A pinion 67 directly connected to a motor 63 engages the rack 72A through the opening portion 68A. Thus, when the motor 63 is operated, the pinion 67 is rotated, and the holder 72 slides through the rack 72A.

Here, the sensor electrode 38 is attached to the holder 72. When a finger touches the sensor electrode 38, the motor 63 is actuated (rotate in the forward direction) and the holder 72 slides, so that the cup holding portion 70 becomes a usable state (refer to Fig. 11(B)). When the finger touches the sensor electrode 38 again, the motor 63 is actuated (rotate in the reverse direction), so that the cup holding portions 70 accommodated in the holder 72 becomes a non-usable state (refer to Fig. 11(A)).

As described above, by attaching the sensor electrode 38 to the holder 72, the cup holding portions 70 can be made in a usable state according to a natural mode of human engineering such as touching an object to be moved.

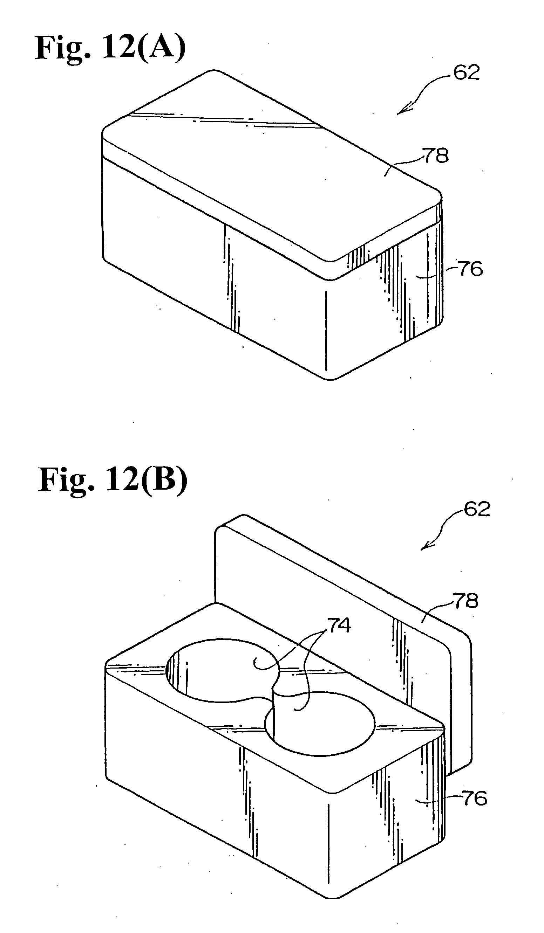

On the other hand, the cup holder 62 shown in Figs. 12(A) and 12 (B) includes a case 76 (may be used as the console box) having cup holding portions 74 to be attached to the center console box. After a lid 78 slides along an upper surface of the case 76, the lid is rotated and disposed in parallel with a sidewall of the case 76. In this state, the cup holding portions 74 is in a usable state (refer to Fig. 12(B)).

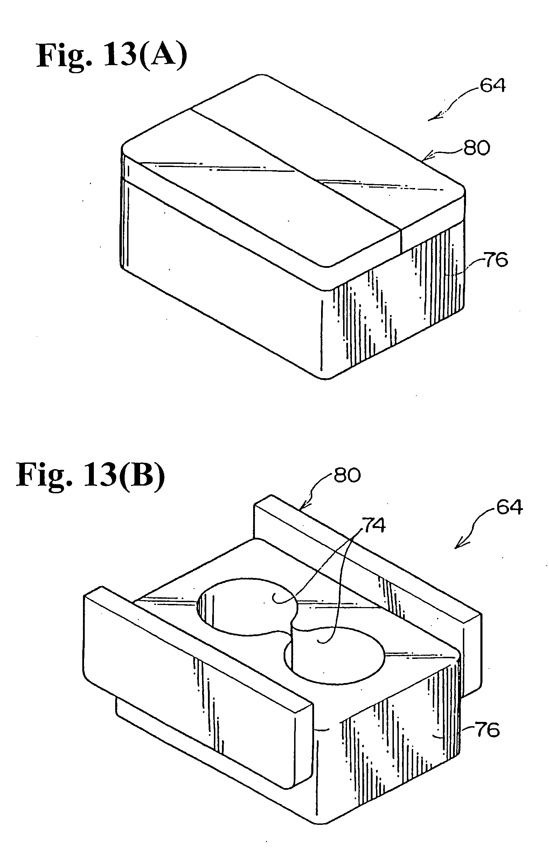

Here, while the cup holder 62 shown in Figs. 12 (A) and 12(B) employs a single lid 78 to be opened or closed, two lids 80 of a gate fold type may be used as shown in Figs. 13(A) and 13(B).

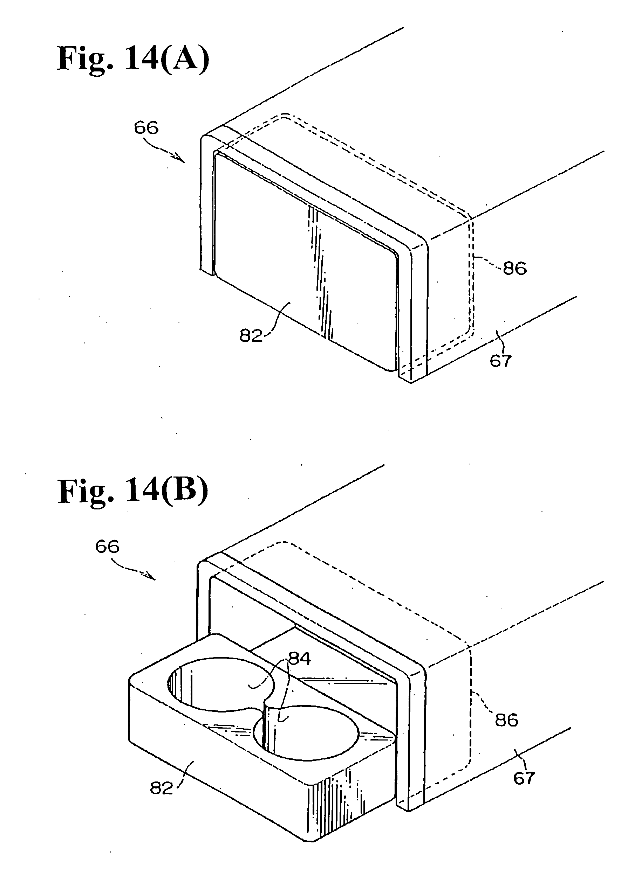

Further, the cup holder 66 shown in Figs. 14(A) and 14(B) includes a housing portion 86 to be attached to a rear end portion of the console or an armrest 67 for a rear seat. A cup holder 82 is rotatably supported with respect to the housing portion 86.

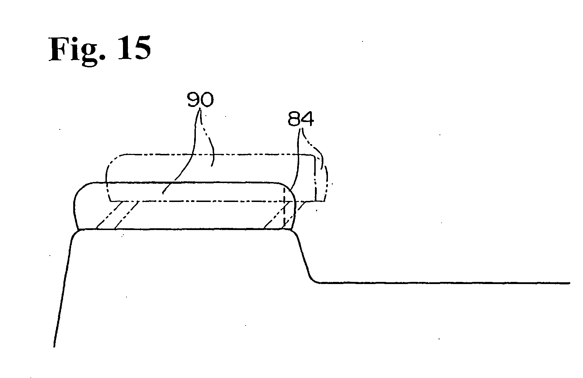

In addition to the cup holders, as shown in Fig. 15, the moving device may be applied to a pop-up armrest 90. In the armrest to be installed to a center console and the like, the pop-up armrest 90 is structured to be movable in upward and/or forward with an embedded lift mechanism such as pantograph for convenience of the user.

A pressure detecting sensor 84, for example, may be attached at a leading end portion of the pop-up armrest 90, and when a hand touches the pressure detecting sensor 84, the movement of the hand may be detected through the pressure change when the hand touches.

Thus, while holding an arm on the pup-up armrest 90, since the position of the pop-up armrest 90 can be changed by the movement of a finger-tip, the pop-up armrest 90 can be installed at an optimum position.

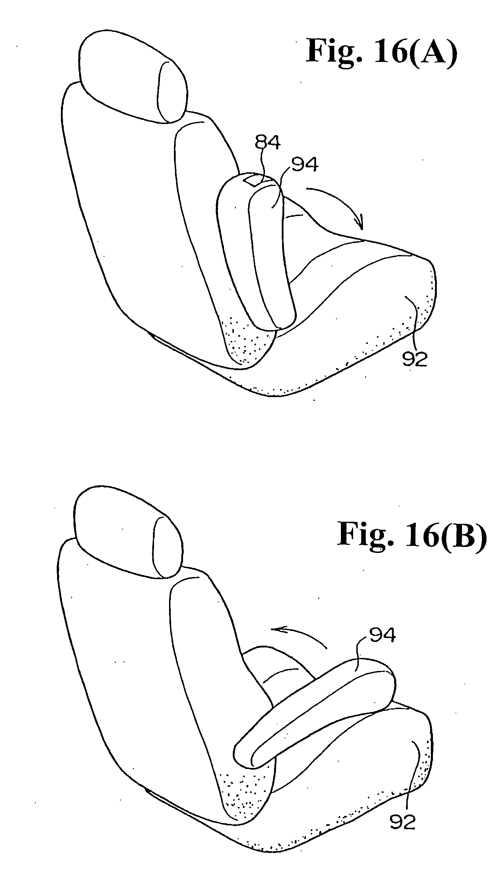

Incidentally, other sensors may be employed. Also, as shown in Figs. 16(A) and 16(B), the moving device may be applied to the armrest 94 rotatably attached to a side of a seat 92.

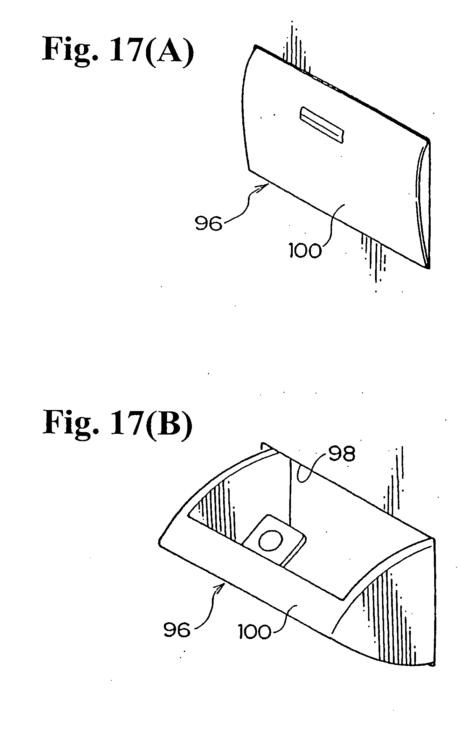

Also, as shown in Figs. 1, 17(A) and 17(B), the moving device may be applied to a glove box 96. The glove box 96 is provided, as a storage space, to an instrument panel of a passenger seat and the like, wherein a housing portion 98 is attached to a bracket provided to a car body. A lid 100 is opened or closed with respect to the housing portion 98, and the housing portion 98 becomes a usable state when the lid 100 is opened.

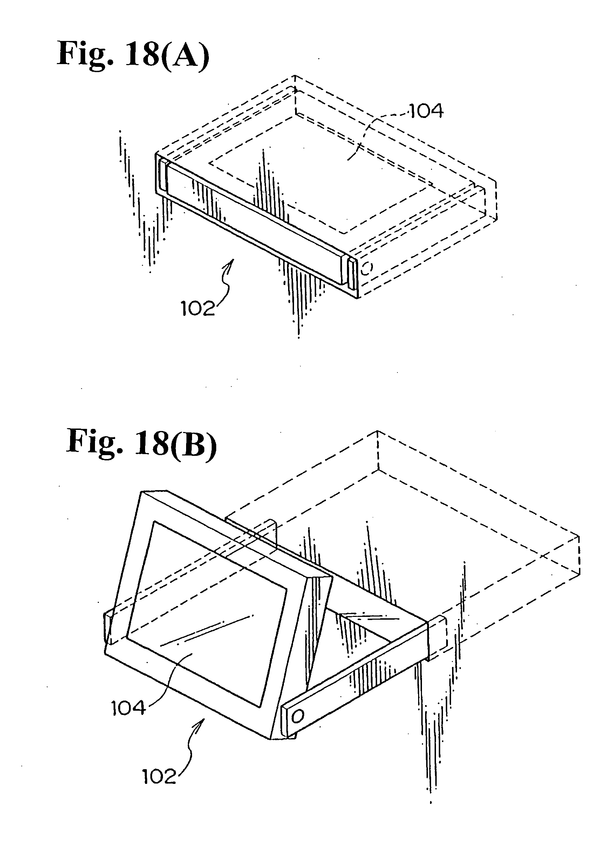

Further, as shown in Figs. 1, 18(A) and 18(B), the moving device may be applied to a navigator 102. When applied to the navigator 102, a monitor 104 may be housed in the instrument panel in a non-usable state. When the monitor 104 slides inside the compartment to rotate, the monitor 104 stands up to become a usable state. When a CD player (not shown) and the like is built in, the monitor stands up in the normal state, and when the CD and the like is taken out, the monitor is rotated to fall sideways.

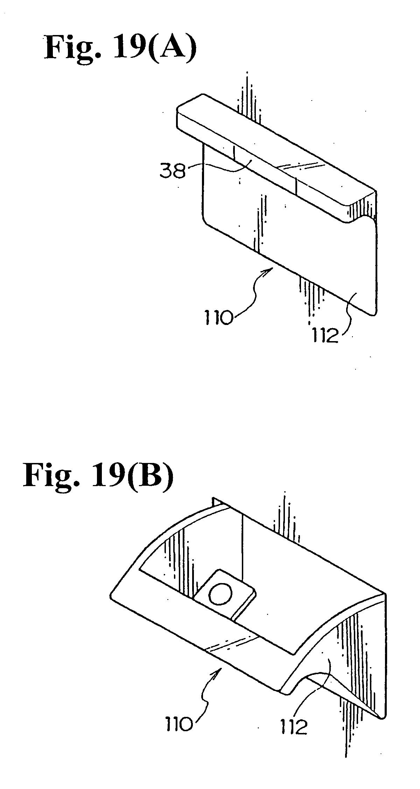

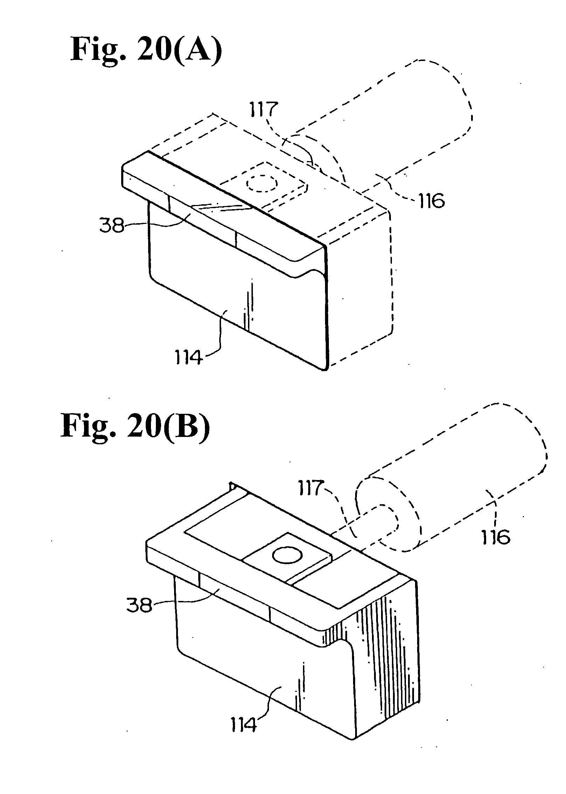

Also, the moving device may be applied to an ashtray 110 as shown in Figs. 1, 19(A) and 19(B). The ashtray 110 becomes a usable state or a non-usable state through a rotating movement of the ashtray main portion 112. As shown in Figs. 20 (A) and 20(B), the ashtray becomes a usable state or a non-usable state through a sliding movement of the ashtray main portion 114.

Here, as a driving device for moving the ashtray main portion 114, not limited to a motor, a solenoid 116 may be used. Thus, a leading edge surface of a plunger 117 is directly connected to the solenoid 116 to come in or out, and is fixed to a rear surface of the ashtray main portion 114, so that the ashtray main portion 114 slides. By using the solenoid 116, the mechanism for moving the ashtray main portion 114 can be simplified.

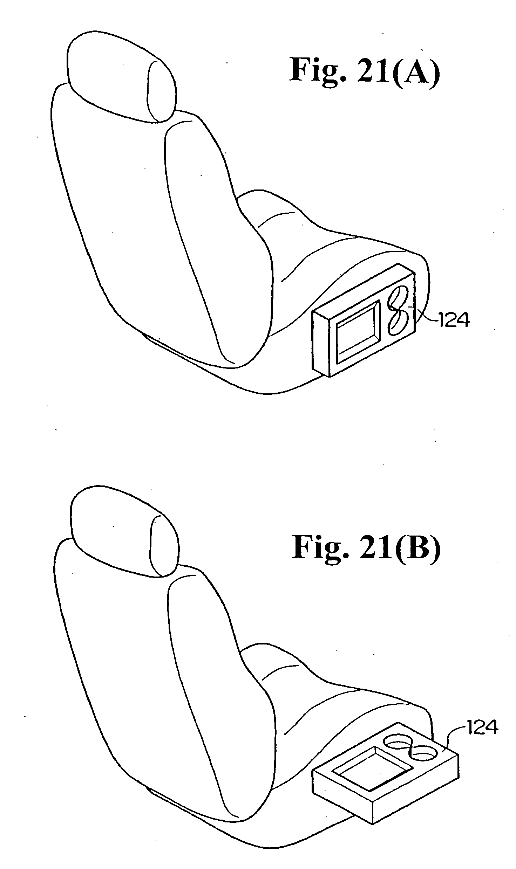

Also, the moving device may be applied to a table 124 as shown in Figs. 21(A) and 21(B). The table 124 is installed between the driver seat and the passenger seat or on a seat back to becomes a usable position or a non-usable position by rotating thereof.

Further, as shown in Fig. 1, the moving device may be applied to a case 125 for glasses. The case 125 is often attached to a roof of a vehicle, wherein a lid 126 is rotatably attached to a main body provided in the roof, and the case 125 becomes a usable state or a non-usable state by rotating the lid 126.

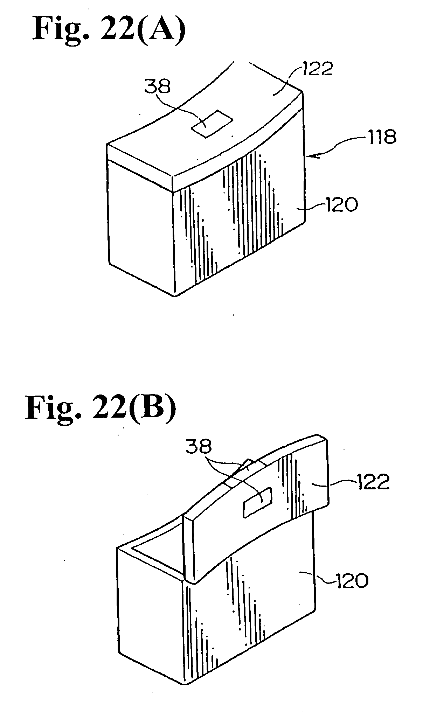

Also, as shown in Figs. 1, 22 (A) and 22(B), the moving device may be applied to a trash box 118. The trash box 118 is disposed on a side of a center console 121, or near the feet portion of the driver seat and/or the passenger seat. The trash box 118 is formed of a trash box main portion 120 and a lid 122 attached to be opened or closed with respect to the trash box main portion 120.

In the open state of the lid 122, the trash box main portion 120 becomes the usable state. Here, for example, when a sensor electrode 38 is disposed on an upper surface of the lid 122, since the upper surface of the lid 122 is positioned on a sidewall side of the center console 121 in the opened state of the lid 122, it is difficult to use it when the lid 122 is closed. Therefore, while another sensor electrode 38 may be disposed on a sidewall of the lid 122, it is preferable to dispose the sensor electrode on the side of the trash box main portion 120.

For example, as shown in Fig. 1, when the moving device is applied to a sun visor 134 or an assist grip 138, especially in a case of the sun visor 134, when the sun visor 134 is viewed from the driver seat and the passenger seat, the front surface and the backside surface of the sun visor 134 become different in the non-usable state and the usable state.

Therefore, in s case of the sun visor 134 and the assist grip 138, it is preferable to attach a sensor to a position other than the sun visor 134 and the assist grip 138. For example, a heat-detecting sensor 136 is attached to the roof for detecting the movement of a hand by detecting a body temperature of a user.

In a case of the sun visor 134, since the movement of the hand can be detected without directly touching the hand, the sun visor 134 can be made in the usable state or the none-usable state while the user sits on a seat. Thus, it is greatly convenient for the user not to be required to bend forward for making the sun visor 134 in the usable state or non-usable state.

Incidentally, the sensors used in the above-described respective moving devices are only a few samples, and are not limited thereto. The sensors vary depending on the specifications of the moving devices.

With the above-described structures, according to the first or second aspect of the invention, since the moving device uses the sensor for detecting the movement of the user, as compared with a mechanical type sensor as a push button and the like, an operational stroke such as pressing is not required, nor a pressing force by a fingertip is required. Thus, in any posture of the user, the driving device can be easily operated so that a movable member becomes the usable state or the non-usable state with the driving device. Also, since the driving device of the invention does not make any operating sound different from the push button, a high-grade feeling can be obtained. Further, since it is sufficient that the user lightly touches the sensor or just moving sign of the driver is detected, visual search of the operation button is not required, so that the driver can concentrate on the driving.

In the driving device according to the third or fourth aspect of the invention, as compared with the driving device of a mechanical type having an opening button for opening and a closing button for closing on different positions, since the opening/closing operations can be carried out without realizing the right or left, or up and down directions, the driver can concentrate on the driving.

In the driving device according to the fifth or sixth aspect of the invention, the movable member can be made in a usable state or non-using state according to a mode of human engineering. According to the seventh aspect of the invention, the driving device is made in the usable state by rotating the movable member, and according to the eighth aspect of the invention, the driving device is made in the usable state by sliding the driving member. According to the ninth aspect of the invention, the housing portion of the driving device is made in the usable state by opening or closing the movable member.

In the driving device according to the tenth aspect of the invention, the movement of the hand can be detected without directly toughing to the sensor. According to the eleventh or twelfth aspect of the invention, since anything with conductivity can be used as a sensor electrode, it is convenient. Also, the sensor is less sensitive to a noise than an electric wave type sensor, and hard to malfunction. Further, the sensitivity adjustment can be easily made and, at the same time, the circuit is simple, thereby reducing cost.

According to the thirteenth aspect of the invention, the movement of the hand can be detected by a heat detecting sensor. According to the fourteenth aspect of the invention, the movement of the hand can be detected by the pressure detecting sensor. According to the fifteenth through seventeenth aspects of the invention, the resolution is so high that the movement of the user can be detected by simply slightly blocking the light with the user's hand. Also, since the driving device has high sensitivity and is less sensitive to the electric noise, there is no risk of malfunctioning by the radio wave of a cell phone and the like. Further, the circuit is simple, and its cost is low. Moreover, since the movement of the user can be detected when the light from the light-emitting portion is blocked, anything other than the hand of the user may be used.

In the driving device according to the eighteenth and nineteenth aspects of the invention, the rotating speed of the movable member can be changed through the rotating speed of the motor, and the movable member can be quietly rotated. Thus, when the movable member is moved, the contact sound between the movable member and the housing portion and the like can be eliminated, thereby obtaining a high-grade feeling as the moving device.

## Claims

1. A moving device (10, 58, 60, 62, 64, 66, 90, 94, 96, 102, 110, 114, 118, 124) for moving a movable member between a usable position and a non-usable position, comprising:
a driving device (18) attached to the movable member for moving the same, and
a control device (40) electrically connected to the driving device for operating the driving device to move the movable member between the usable position and the non-usable position,
said moving device being **characterized in that** the moving device (10, 58, 60, 62, 64, 66, 90, 94, 96, 102, 110, 114, 118, 124) further comprises a sensor (38, 44, 54, 56) for detecting a movement of an occupant so that the control device (40) moves the movable member based on a signal from the sensor.

2. A moving device (10, 58, 62, 64, 118) according to claim 1, wherein said driving device (18) moves the movable member to cover or uncover a housing portion between the usable position and the non-usable position.

3. A moving device (10, 58, 60, 62, 64, 66, 90, 94, 96, 102, 110, 114, 118, 124) according to claim 1 or 2, wherein said control device (40) operates the driving device (18) based on a signal from said sensor (38, 44, 54, 56).

4. A moving device (10, 58, 60, 62, 64, 66, 90, 94, 96, 102, 110, 114, 118, 124) according to claim 2 and 3, wherein said control device (40) operates the driving device (18) to move the movable member to cover or uncover the housing portion based on a signal from said sensor (38, 44, 54, 56).

5. A moving device(10, 58, 60, 62, 64, 66, 90, 94, 96, 102, 110, 114, 118, 124) according to any one of claims 1 to 4, wherein said sensor (38, 44, 54, 56) is attached to the movable member.

6. A moving device (10, 58, 60, 62, 64, 66, 90, 94, 96, 102, 110, 114, 118, 124) according to any one of claims 1 to 5, wherein said sensor (38, 44, 54, 56) is attached to a periphery of the movable member.

7. A moving device (10, 58, 62, 64, 90, 94, 96, 110, 118, 124) according to any one of claims 1 to 6, wherein said driving device (18) moves the movable member through rotation.

8. A moving device (60, 66, 102, 114) according to any one of claims 1 to 6, wherein said driving device (18) moves the movable member through sliding.

9. A moving device (10, 64, 96, 118) according to any one of claims 1 to 6, wherein said driving device (18) moves the movable member through opening and closing.

10. A moving device (10, 58, 60, 62, 64, 66, 90, 94, 96, 102, 110, 114, 118, 124) according to any one of claims 1 to 9, wherein said sensor is an electric wave sensor (44) with an antenna portion (46) for detecting the movement of the occupant based on a time while an electric wave sent out from the antenna portion is returned by hitting the occupant.

11. A moving device (10, 58, 60, 62, 64, 66, 90, 94, 96, 102, 110, 114, 118, 124) according to any one of claims 1 to 9, wherein said sensor is an electrostatic capacitance sensor (36) for detecting the movement of the occupant base on a change in electrostatic capacitance when the occupant touches the sensor.

12. A moving device (10, 58, 60, 62, 64, 66, 90, 94, 96, 102, 110, 114, 118, 124) according to claim 11, wherein said electrostatic capacitance sensor is a material sensor (36) having a conductive member.

13. A moving device (10, 58, 60, 62, 64, 66, 90, 94, 96, 102, 110, 114, 118, 124) according to any one of claims 1 to 9, wherein said sensor is a heat detecting sensor for detecting the movement of the occupant based on a body temperature.

14. A moving device (10, 58, 60, 62, 64, 66, 90, 94, 96, 102, 110, 114, 118, 124) according to any one of claims 1 to 9, wherein said sensor is a pressure detecting sensor for detecting the movement of the occupant based on a pressure when the occupant touches the sensor.

15. A moving device (10, 58, 60, 62, 64, 66, 90, 94, 96, 102, 110, 114, 118, 124) according to any one of claims 1 to 9, wherein said sensor is a light detecting sensor (54, 56) including a light emitting portion for emitting light and a light receiving portion for receiving the light from the light emitting portion for detecting the movement of the hand when the light is blocked by the occupant.

16. A moving device (10, 58, 60, 62, 64, 66, 90, 94, 96, 102, 110, 114, 118, 124) according to claim 15, wherein said light detecting sensor is an infrared transmission sensor (56) having the light emitting portion and the light receiving portion arranged opposite to each other.

17. A moving device (10, 58, 60, 62, 64, 66, 90, 94, 96, 102, 110, 114, 118, 124) according to claim 15, wherein said light detecting sensor is an infrared reflection sensor (54) having the light emitting portion and the light receiving portion arranged adjacent to each other.

18. A moving device (10, 58, 60, 62, 64, 66, 90, 94, 96, 102, 110, 114, 118, 124) according to any one of claims 1 to 18, wherein said driving device (18) includes a rotating device (30A, 30B) for rotating the movable member and a motor (18) for providing a rotational force to the rotating device (30A, 30B).

19. A moving device (10, 58, 60, 62, 64, 66, 90, 94, 96, 102, 110, 114, 118, 124) according to any one of claims 1 to 18, wherein said driving device comprises a motor (18) for providing a rotational force and a converting device for converting the rotational force to a sliding force to slide the movable member.
